# EUROPEAN PATENT APPLICATION

(11) **EP 4 564 932 A1**
(43) Date of publication of application: **04.06.2025**
(21) Application number: 23845150.4
(22) Date of filing: 20.06.2023
(51) Int. Cl.: H04W 52/02

(54) **CELL SERVICE CONTROL METHOD, SIGNAL CONFIGURATION METHOD, SIGNAL SENDING METHOD, DEVICE, AND TERMINAL**

(30) Priority: 29.07.2022 CN 202210907951
(71) Applicant: Datang Mobile Communications Equipment Co., Ltd., Beijing 100085 (CN)
(72) Inventor: ZHANG, Dajun, Beijing 100085 (CN)
(74) Representative: Maiwald GmbH
(86) International application number: PCT/CN2023/101315
(87) International publication number: WO 2024/021937

(57) **Abstract**

The present invention provides a cell service control method, a signal configuration method, a signal transmission method, a device, and a terminal. The cell service control method comprises: when a first cell of a first network device is in an energy-saving state, the first network device detects an uplink energy-saving reference signal; and the first network device starts a communication service of the first cell according to the detected uplink energy-saving reference signal.

## Description

### CROSS-REFERENCE TO RELATED APPLICATION

This disclosure claims the priority of Chinese Patent Application No. 202210907951.1 filed in China on July 29, 2022, the disclosure of which is hereby incorporated herein by reference in its entirety.

### TECHNICAL FIELD

The present disclosure relates to the field of communications technologies, and in particular, to a cell service control method, a signal configuration method, a signal transmission method, a device, and a terminal.

### BACKGROUND

In some communication systems (for example, a 5th Generation Mobile Communication Technology (5G) communication system), energy consumption of a network device is a main problem in a communication system, and the energy consumption of the network device is an important constraint factor for operator network deployment, operation, and popularization of some communication systems. Therefore, how to save energy consumption of a network device is an urgent technical problem in the art.

### SUMMARY

Embodiments of the present disclosure provide a cell service control method, a signal configuration method, a signal transmission method, a device, and a terminal, to resolve a problem of saving energy-consumption of a network device.

A cell service control method is provided. The method includes: detecting, by a first network device, an uplink energy-saving reference signal in a case that a first cell of the first network device is in an energy-saving state; starting, by the first network device, a communication service of the first cell according to the detected uplink energy-saving reference signal.

Optionally, the starting, by the first network device, the communication service of the first cell according to the detected uplink energy-saving reference signal includes: starting, by the first network device, the communication service of the first cell when detecting that the uplink energy-saving reference signal meets a preset condition.

Optionally, the preset condition includes at least one of the following: a signal strength of the uplink energy-saving reference signal exceeds a first preset threshold; a quantity of terminals that send the uplink energy-saving reference signal exceeds a second preset threshold.

Optionally, the uplink energy-saving reference signal includes one of the following: a newly defined pilot signal in a protocol, a sounding reference signal SRS defined in a protocol, and a positioning reference signal defined in a protocol.

Optionally, the uplink energy-saving reference signal includes: an uplink energy-saving reference signal sent by a terminal based on configuration information of an uplink energy-saving reference signal, wherein the configuration information is obtained by the terminal from a second cell, and the second cell is a serving cell of the terminal.

Optionally, the starting the communication service of the first cell includes: activating the first cell to start the communication service of the first cell.

Optionally, the communication service includes: sending a downlink common signal and/or receiving an uplink signal; wherein the uplink signal and the uplink energy-saving reference signal are different signals.

Optionally, the method further includes: sending, by the first network device, configuration information of the uplink energy-saving reference signal to a network device associated with a second cell; or sending, by the first network device, reference information of configuration information of the uplink energy-saving reference signal to a network device associated with a second cell, wherein the reference information is used by the second cell to determine configuration information of the uplink energy-saving reference signal; or receiving, by the first network device, configuration information of the uplink energy-saving reference signal sent by a network device associated with the second cell; wherein the second cell is not in an energy-saving state.

Optionally, the configuration information includes at least one of the following: a signal identifier, a cell identifier, a frequency-domain resource location, a time-domain resource location, a period, and a power.

Optionally, in a case that the first network device sends the configuration information or the reference information to a network device associated with the second cell, the method further includes: receiving, by the first network device, a request message sent by a network device associated with the second cell, wherein the request message is used to obtain the configuration information, or the request message is used to obtain the reference information.

Optionally, the method further includes: sending, by the first network device, state information of the first cell to a network device associated with a second cell; wherein the second cell is not in an energy-saving state.

A signal configuration method is further provided. The method includes: obtaining, by a second network device, configuration information of an uplink energy-saving reference signal of a first cell, wherein a state supported by the first cell includes an energy-saving state; sending, by the second network device in a second cell of the second network device, the configuration information to a terminal; wherein the second cell is not in an energy-saving state.

Optionally, the sending, by the second network device in the second cell of the second network device, the configuration information to the terminal includes one of the following: sending, by the second network device, the configuration message to the terminal through a dedicated message in the second cell of the second network device; or sending, by the second network device, the configuration message to the terminal through a broadcast message in the second cell of the second network device; or sending, by the second network device, the configuration message to the terminal through a multicast message in the second cell.

Optionally, the obtaining, by the second network device, the configuration information of the uplink energy-saving reference signal of the first cell includes: receiving, by the second network device, configuration information of the uplink energy-saving reference signal sent by a network device associated with the first cell; or receiving, by the second network device, reference information of configuration information of the uplink energy-saving reference signal sent by a network device associated with the first cell, wherein the reference information is used by the second cell to determine the configuration information of the uplink energy-saving reference signal; and determining, by the second network device, configuration information of the uplink energy-saving reference signal based on the reference information; or allocating, by the second network device, configuration information of the uplink energy-saving reference signal.

Optionally, in a case that the second network device determines the configuration information of the uplink energy-saving reference signal based on the reference information, or when the second network device allocates the configuration information of the uplink energy-saving reference signal, the method further includes: sending, by the second network device, the configuration information of the uplink energy-saving reference signal to a network device associated with the first cell.

Optionally, in a case that the second network device receives the configuration information of the uplink energy-saving reference signal sent by the network device associated with the first cell, or when the second network device receives the reference information of the configuration information of the uplink energy-saving reference signal sent by the network device associated with the first cell, the method further includes: sending, by the second network device, a request message to the network device associated with the first cell, wherein the request message is used to obtain the configuration information, or the request message is used to obtain the reference information.

Optionally, the uplink energy-saving reference signal includes one of the following: a newly defined pilot signal in a protocol, a sounding reference signal SRS defined in a protocol, and a positioning reference signal defined in a protocol.

Optionally, the configuration information includes at least one of the following: a signal identifier, a cell identifier, a frequency-domain resource location, a time-domain resource location, a period, and a power.

Optionally, the method further includes: receiving, by the second network device, state information of the first cell sent by the network device associated with the first cell.

A signal transmission method is provided. The method includes: obtaining, by a terminal, configuration information of an uplink energy-saving reference signal of a first cell, wherein a state supported by the first cell includes an energy-saving state; sending, by the terminal, the uplink energy-saving reference signal in the first cell based on the configuration information.

Optionally, the obtaining, by the terminal, the configuration information of the uplink energy-saving reference signal of the first cell includes one of the following: receiving, by the terminal, the configuration information of the uplink energy-saving reference signal sent by a network device associated with a second cell through a dedicated message; or receiving, by the terminal, the configuration information of the uplink energy-saving reference signal sent by a network device associated with a second cell through a broadcast message; or receiving, by the terminal, the configuration information of the uplink energy-saving reference signal sent by a network device associated with a second cell through a multicast message; wherein the second cell is not in an energy-saving state.

Optionally, the uplink energy-saving reference signal includes one of the following: a newly defined pilot signal in a protocol, a sounding reference signal SRS defined in a protocol, and a positioning reference signal defined in a protocol.

Optionally, the configuration information includes at least one of the following: a signal identifier, a cell identifier, a frequency-domain resource location, a time-domain resource location, a period, and a power.

A network device is provided. The network device is a first network device, the network device includes a memory, a transceiver, and a processor, wherein, the memory is configured to store a computer program; the transceiver is configured to send and receive data under the control of the processor; and the processor is configured to read the computer program in the memory and perform the following operations: detecting an uplink energy-saving reference signal in a case that a first cell of the first network device is in an energy-saving state; starting a communication service of the first cell according to the detected uplink energy-saving reference signal.

Optionally, the starting the communication service of the first cell according to the detected uplink energy-saving reference signal includes: starting the communication service of the first cell when detecting that the uplink energy-saving reference signal meets a preset condition.

Optionally, the preset condition includes at least one of the following: a signal strength of the uplink energy-saving reference signal exceeds a first preset threshold; a quantity of terminals that send the uplink energy-saving reference signal exceeds a second preset threshold.

Optionally, the communication service includes: sending a downlink common signal and/or receiving an uplink signal; wherein the uplink signal and the uplink energy-saving signal are different signals.

Optionally, the uplink energy-saving reference signal includes: the uplink energy-saving reference signal sent by the terminal based on the configuration information of an uplink energy-saving reference signal, wherein the configuration information is obtained by the terminal from a second cell, and the second cell is a serving cell of the terminal.

Optionally, the processor is further configured to: send the configuration information of the uplink energy-saving reference signal to a network device associated with a second cell; or send reference information of the configuration information of the uplink energy-saving reference signal to a network device associated with a second cell, wherein the reference information is used by the second cell to determine the configuration information of the uplink energy-saving reference signal; or receive the configuration information of the uplink energy-saving reference signal sent by a network device associated with a second cell; wherein the second cell is not in an energy-saving state.

Optionally, when the first network device sends the configuration information or the reference information to the network device associated with the second cell, the processor is further configured to: receive a request message sent by the network device associated with the second cell, wherein the request message is used to obtain the configuration information, or the request message is used to obtain the reference information.

Optionally, the processor is further configured to: send state information of the first cell to a network device associated with a second cell; wherein the second cell is not in an energy-saving state.

A network device is further provided. The network device is a second network device, the network device includes a memory, a transceiver, and a processor, the memory is configured to store a computer program; the transceiver is configured to send and receive data under the control of the processor; the processor is configured to read the computer program in the memory and perform the following operations: obtaining configuration information of an uplink energy-saving reference signal of a first cell, wherein a state supported by the first cell includes an energy-saving state; sending, in a second cell of the second network device, the configuration information to a terminal; wherein the second cell is not in an energy-saving state.

Optionally, sending, in the second cell of the second network device, the configuration information to the terminal includes one of the following: sending, in the second cell of the second network device, the configuration message to the terminal through a dedicated message; or sending, in the second cell, the configuration message to the terminal through a broadcast message; or sending, in the second cell of the second network device, the configuration message to the terminal through a multicast message.

Optionally, obtaining the configuration information of the uplink energy-saving reference signal of the first cell includes: receiving the configuration information of the uplink energy-saving reference signal sent by a network device associated with the first cell; or receiving reference information of the configuration information of the uplink energy-saving reference signal sent by a network device associated with the first cell, wherein the reference information is used by the second cell to determine the configuration information of the uplink energy-saving reference signal; and determining, by the second network device, the configuration information of the uplink energy-saving reference signal based on the reference information; or allocating the configuration information of the uplink energy-saving reference signal.

Optionally, in a case that the second network device determines the configuration information of the uplink energy-saving reference signal based on the reference information, or in a case that the second network device allocates the configuration information of the uplink energy-saving reference signal, the processor is further configured to: send the configuration information of the uplink energy-saving reference signal to a network device associated with the first cell.

Optionally, the processor is further configured to: in a case that the second network device receives the configuration information of the uplink energy-saving reference signal sent by the network device associated with the first cell, or in a case that the second network device receives the reference information of the configuration information of the uplink energy-saving reference signal sent by the network device associated with the first cell, the processor is further configured to: send a request message to the network device associated with the first cell, wherein the request message is used to obtain the configuration information, or the request message is used to obtain the reference information.

Optionally, the processor is further configured to: receive state information of the first cell sent by the network device associated with the first cell.

A terminal is further provided. The terminal includes: a memory, a transceiver, and a processor, wherein the memory is configured to store a computer program; the transceiver is configured to send and receive data under the control of the processor; and the processor is configured to read the computer program in the memory and perform the following operations: obtaining configuration information of an uplink energy-saving reference signal of a first cell, wherein a state supported by the first cell includes an energy-saving state; and sending the uplink energy-saving reference signal in the first cell based on the configuration information.

Optionally, obtaining the configuration information of the uplink energy-saving reference signal of the first cell includes one of the following: receiving the configuration information of the uplink energy-saving reference signal sent by a network device associated with a second cell through a dedicated message; or receiving the configuration information of the uplink energy-saving reference signal sent by a network device associated with a second cell through a broadcast message; or receiving the configuration information of the uplink energy-saving reference signal sent by a network device associated with a second cell through a multicast message; wherein the second cell is not in an energy-saving state.

A network device is further provided. The network device is a first network device, the network device includes: a detection unit, configured to detect an uplink energy-saving reference signal when a first cell of the first network device is in an energy-saving state; a start unit, configured to start a communication service of the first cell according to the detected uplink energy-saving reference signal.

A network device is further provided. The network device is a second network device, the second network device includes: an obtaining unit, configured to obtain configuration information of an uplink energy-saving reference signal of a first cell, wherein a state supported by the first cell includes an energy-saving state; a first sending unit, configured to send the configuration information to a terminal in a second cell of the second network device; wherein the second cell is not in an energy-saving state.

A terminal is further provided. The terminal includes: an obtaining unit, configured to obtain configuration information of an uplink energy-saving reference signal of a first cell, wherein a state supported by the first cell includes an energy-saving state; a sending unit, configured to send the uplink energy-saving reference signal in the first cell based on the configuration information.

A processor-readable storage medium is provided. The processor-readable storage medium stores a computer program, and the computer program is configured to cause the processor to perform a cell service control method provided by the present disclosure, or the computer program is configured to cause the processor to perform the signal configuration method provided by the present disclosure, or the computer program is configured to cause the processor to perform the signal transmission method provided.

In this embodiment of the present disclosure, when the first cell of the first network device is in an energy-saving state, the first network device detects an uplink energy-saving reference signal; and the first network device starts the communication service of the first cell according to the detected uplink energy-saving reference signal. In this way, the communication service of the first cell can be started only when the uplink energy-saving reference signal is detected, so as to save energy consumption of the network device.

### BRIEF DESCRIPTION OF THE DRAWINGS

FIG. 1 is a schematic structural diagram of an applicable network architecture according to an implementation of the present disclosure;
FIG. 2 is a flowchart of a cell service control method according to an embodiment of the present disclosure;
FIG. 3 is a flowchart of a signal configuration method according to an embodiment of the present disclosure;
FIG. 4 is a flowchart of a signal transmission method according to an embodiment of the present disclosure;
FIG. 5 is a structural diagram of a network device according to an embodiment of the present disclosure;
FIG. 6 is a structural diagram of another network device according to an embodiment of the present disclosure;
FIG. 7 is a structural diagram of a terminal according to an embodiment of the present disclosure;
FIG. 8 is a structural diagram of another network device according to an embodiment of the present disclosure;
FIG. 9 is a structural diagram of another network device according to an embodiment of the present disclosure;
FIG. 10 is a structural diagram of another terminal according to an embodiment of the present disclosure.

### DETAILED DESCRIPTION

In order to make the technical problems, technical solutions and advantages to be solved by the present disclosure clearer, the following describes in detail with reference to the accompanying drawings and specific embodiments.

In the embodiments of the present disclosure, the term "and/or" describes an association relationship between associated objects, indicating that there may be three relationships, for example, A and/or B may indicate that A exists alone, A and B exist at the same time, and B exists alone. The character "/" generally indicates an "or" relationship between the associated objects.

In the embodiments of the present disclosure, the term "a plurality of" means two or more, and other quantifiers are similar.

The technical solutions in the embodiments of the present disclosure will be clearly and completely described below with reference to the accompanying drawings in the embodiments of the present disclosure. All other embodiments obtained by a person of ordinary skill in the art based on the embodiments of the present disclosure without creative efforts shall fall within the protection scope of the present disclosure.

Embodiments of the present disclosure provide a cell service control method, a signal configuration method, a signal transmission method, a device, and a terminal, to resolve a problem of how to save energy consumption of a network device.

The method and the device are based on the same application concept, and because the method and the device solve the principle similar to the problem, the implementation of the apparatus and the method may refer to each other, and details are not described herein again.

The technical solutions provided in the embodiments of the present disclosure may be applicable to various systems, especially 6G systems. For example, the applicable system may be a global system of mobile communication (GSM) system, a code division multiple access (CDMA) system, a wideband code division multiple access (WCDMA) general packet radio service (GPRS) system, a Long Term Evolution (LTE) system, an LTE Frequency Division Duplex (FDD) system, an LTE Time Division Duplex (TDD) system, a Long Term Evolution Advanced (LTE-A) system, a Universal Mobile Telecommunication System (UMTS), A Worldwide Interoperability for Microwave Access (WiMAX) system, a 5G new radio (NR) system, a 6G system, and the like. The plurality of systems each include a terminal device and a network device. The system may further include a core network part, for example, an Evolved Packet System (EPS), a 5G system (5G System, 5 GS), and the like.

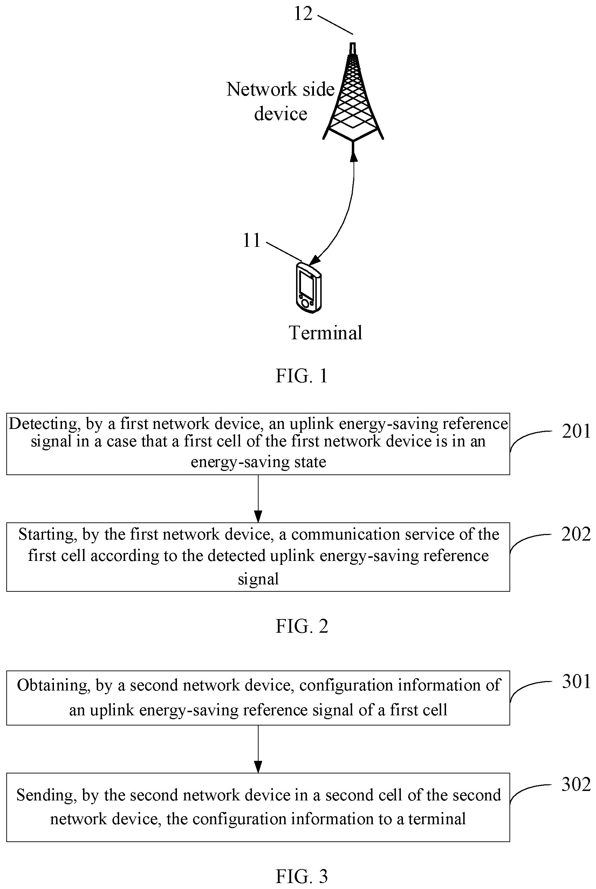

Referring to FIG. 1, FIG. 1 is a schematic structural diagram of a network architecture to which an implementation of the present disclosure is implemented, as shown in FIG. 1, including a terminal 11 and a network device 12, wherein: the terminal 11 in the embodiments of the present disclosure may be a device that provides voice and/or data connectivity to a user, a handheld device having a wireless connection function, or another processing device connected to a wireless modem. In different systems, the name of the terminal device may be different, for example, in a 5G system, the terminal device may be referred to as user equipment (UE). The wireless terminal device may communicate with one or more core networks (CN) via a radio access network (RAN), and the wireless terminal device may be a mobile terminal device, such as a mobile phone (or referred to as a "cellular" phone) and a computer having a mobile terminal device, for example, may be a portable, pocket-sized, handheld, computer built-in or vehicle-mounted mobile device, which exchanges language and/or data with a radio access network. For example, a Personal Communication Service (PCS) phone, a cordless telephone, a Session Initiated Protocol (SIP) phone, a Wireless Local Loop (WLL) station, a personal digital assistant (PDA), a Redcap terminal, and the like. The wireless terminal device may also be referred to as a system, a subscriber unit, a subscriber station, a mobile station, a mobile station, a remote station, an access point, a remote terminal, an access terminal, a user terminal, a user agent, and a user device, which are not limited in the embodiments of the present disclosure.

The network device 12 in this embodiment of the present disclosure may be a base station, and the base station may include a plurality of cells that provide a service for the terminal. Depending on the specific application scenario, the base station may also be referred to as an access point, or may be a device in the access network that communicates with the wireless terminal device through one or more sectors on the air interface, or another name. The network device may be configured to replace the received over-the-air frame with an Internet Protocol (IP) packet as a router between the wireless terminal device and the rest of the access network, where the rest of the access network may include an Internet Protocol (IP) communication network. The network device may also coordinate attribute management of the air interface. For example, the network device in the embodiments of the present disclosure may be a Base Transceiver Station (BTS) in a Global System for Mobile Communications (GSM) or a Code Division Multiple Access (Code Division Multiple Access, CDMA), or may be a network device in a Wide-Band Code Division Multiple Access (WCDMA). The embodiment of the present disclosure is not limited in the embodiments of the present disclosure, but may also be an evolved network device in a Long Term Evolution (LTE) system, a 5G base station (Graceful) in a 5G network architecture, a base station in 6G, or a Home Evolved Node B (Femto), a pico base station (Pico), etc. which is not limited in the embodiments of the present disclosure. In some network structures, the network device may include a centralized unit (CU) node and a distributed unit (DU) node, and the centralized unit and the distribution unit may also be geographically separated.

In the embodiments of the present disclosure, the network side and the terminal may each use one or more antennas to perform multi-input multi-output (MIMO) transmission, and the MIMO transmission may be single user MIMO (SU-MIMO) or multi-user MIMO (MU-MIMO). The MIMO transmission may be two-dimensional MIMO (2-dimensional MIMO, 2D-MIMO), three-dimensional MIMO (3D-MIMO), full-dimension MIMO (FD-MIMO), or massive-MIMO (Massive-MIMO), or diversity transmission or precoding transmission or beamforming transmission, according to the form and quantity of the root antenna combination.

Referring to FIG. 2, FIG. 2 is a flowchart of a cell service control method according to an embodiment of the present disclosure, as shown in FIG. 2, including the following steps:
step 201: a first network device detects an uplink energy-saving reference signal in a case that a first cell of the first network device is in an energy-saving state;
step 202: the first network device starts a communication service of the first cell according to the detected uplink energy-saving reference signal.

The first cell may be understood as an energy-saving cell.

In some embodiments, when the first cell is in an energy-saving state, the state is that the first cell can detect an uplink energy-saving reference signal, but does not start the communication service. For example, the state may be a state in which the common signal is not issued, or the state in which the uplink signal different from the uplink energy-saving reference signal is not received, or the state in which the beam is turned off, the part of the frequency bands is turned off, or the transceiver unit is turned off within a part of the time.

In some embodiments, when the first cell is in an energy-saving state, the state may be the state in which the communication service is not started in a part of the area, so that the capacity of the first cell can be enhanced by turning on the communication service in the part of the area. In this implementation, the first cell may also be referred to as a hotspot cell.

Detecting the uplink energy-saving reference signal may be to receive an uplink energy-saving reference signal from the terminal in the first cell.

The uplink energy-saving reference signal may be pre-configured by the network device to the terminal, for example, the network device in the serving cell of the terminal configures the uplink energy-saving reference signal for the terminal.

Detecting the uplink energy-saving reference signal may also be referred to as monitoring, scanning, receiving, or probing an uplink energy-saving reference signal.

In this embodiment of the present disclosure, the uplink energy-saving reference signal includes one of the following:
a newly defined pilot signal in the protocol, a Sounding Reference Signal (SRS) defined in the protocol, and a positioning reference signal defined in the protocol.

The newly defined pilot signal in the above protocol may be understood as that the uplink energy-saving reference signal is an uplink pilot signal dedicated to energy-saving of the network device.

The SRS already defined in the above protocol may be understood as that the foregoing uplink energy-saving reference signal is a traditional SRS being reused.

The positioning reference signal having been defined in the above-mentioned protocol may be understood as that the above-mentioned uplink energy-saving reference signal is a traditional SRS being reused, for example, a traditional positioning SRS is reused.

In this embodiment of the present disclosure, by using the foregoing steps, the communication service of the first cell may be started only when the uplink energy-saving reference signal is detected, so as to save energy consumption of the network device.

In addition, in this embodiment of the present disclosure, since the communication service of the first cell is started according to the detected uplink energy-saving reference signal, the communication service can be started in time based on the detected uplink energy-saving reference signal, so as to avoid affecting the data throughput of the terminal.

In an optional implementation, the starting, by the first network device, a communication service of the first cell according to the detected uplink energy-saving reference signal includes: starting, by the first network device, a communication service of the first cell when detecting that the uplink energy-saving reference signal meets a preset condition.

The preset condition may be defined in a protocol, or may be preconfigured by the network device.

For example, the preset condition includes at least one of the following: a signal strength of the uplink energy-saving reference signal exceeds a first preset threshold; the number of terminals that send the uplink energy-saving reference signal exceeds a second preset threshold.

The first preset threshold and the second preset threshold may be defined in a protocol, or may be preconfigured by the network device.

In this implementation, the first cell (which may also be referred to as an energy-saving cell) in an energy-saving state may detect the uplink energy-saving reference signal, and when a pre-condition is met, the first cell starts a corresponding communication service.

It should be noted that, in the embodiments of the present disclosure, it is not limited to starting the communication service of the first cell when it is detected that the uplink energy-saving reference signal meets the preset condition, for example, in some embodiments, the communication service of the first cell may also be started as long as the uplink saving reference signal is detected.

In an optional implementation, the starting the communication service of the first cell includes: activating the first cell to start a communication service of the first cell.

The activating the first cell may be to activate the first cell according to the detected uplink energy-saving reference signal, so as to start a communication service of the first cell. For example, the uplink energy-saving reference signal is detected, and once the detected uplink energy-saving reference signal reaches a preset condition, for example, the strength of the uplink energy-saving reference signal reaches a preset threshold, or the number of terminals sending the uplink energy-saving reference signal reaches a preset threshold, etc. the first cell decides to locally activate itself.

In this implementation, the communication service may be started by activating the cell. It should be noted that, in the embodiments of the present disclosure, the communication service is not limited by activating the cell, for example, in some embodiments, starting the communication service of the first cell does not need to be activated, and the communication service can be directly started.

In an optional implementation, the communication service includes: sending a downlink common signal and/or receiving an uplink signal; wherein the uplink signal and the uplink energy-saving reference signal are different signals.

The downlink common signal may be a conventional downlink common signal, such as a conventional synchronization signal block (SSB), such as a conventional system information block (SIB).

The receiving the uplink signal may be receiving a conventional uplink signal, for example, an uplink signal initiated by the terminal to access the cell, for example, a random access message.

In this implementation, because the communication service includes at least one of sending the downlink common signal or receiving the uplink signal, the first cell may be supported to serve the terminal, or the terminal may be supported to access the first cell, to improve the service performance of the first cell.

It should be noted that, in this embodiment of the present disclosure, the foregoing communication service is not limited to include at least one of sending a downlink common signal or receiving an uplink signal, for example, in some implementations, the communication service may also include sending a downlink signal dedicated to the terminal.

In addition, starting the communication service of the first cell may be to start a communication service corresponding to the uplink power saving signal being detected, for example, to start a communication service matching the terminal sending the uplink energy-saving reference signal, where the communication service may match with the type of the terminal, or may match with a pre-recorded service of a terminal, or the like, or the communication service may be started in a local area where the terminal sending the uplink energy-saving reference signal is located.

In an optional implementation, the method further includes one of the following: sending, by the first network device, configuration information of the uplink energy-saving reference signal to a network device associated with a second cell; or sending, by the first network device, reference information of configuration information of the uplink energy-saving reference signal to a network device associated with a second cell, where the reference information is used by the second cell to determine configuration information of the uplink energy-saving reference signal; or receiving, by the first network device, configuration information of the uplink energy-saving reference signal sent by a network device associated with the second cell.

The second cell is not in an energy-saving state. The second cell may be a serving cell of the terminal.

The network device associated with the second cell may understand that the second cell is a cell of the network device.

In addition, the first cell and the second cell may be controlled by the same network device, that is, the first network device and the network device (that is, the second network device in the following embodiments) associated with the second cell are the same network device; the first cell and the second cell may also be controlled by different network devices, that is, the first network device and the network device (that is, the second network device in the following embodiments) associated with the second cell are different network devices.

The configuration information includes but is not limited to at least one of the following: a signal identifier, a cell identifier, a frequency-domain resource location, a time-domain resource location, a period, and a power.

The signal identifier is an identifier of the uplink power saving signal, for example, a pilot signal identifier, and the cell identifier is an identifier of a cell corresponding to the uplink energy-saving reference signal.

The frequency-domain resource location may be a non-zero-power (NZP: non-zero-power) channel state information reference signal (CSI-RS) resource (i.e. NZP-CSI-RS-Resource); or, other frequency-domain resource locations. The time-domain resource location may be a time domain offset value, for example, a slot offset value corresponding to the uplink energy-saving reference signal, or may be a specific time-domain resource location.

The foregoing period is a sending period of the uplink energy-saving reference signal, and the power may be a power control offset of the uplink energy-saving reference signal, or a specific sending power.

It should be noted that a mapping relationship may exist among the signal identifier, the cell identifier, the frequency-domain resource location, the time-domain resource location, the period, and the power, that is, other items may be implicitly indicated by using one of all items. For example, the signal identifier may implicitly indicate the cell identifier, the frequency-domain resource location, the time-domain resource location, the period, and the power configured by the identifier.

It should be noted that, in the embodiments of the present disclosure, at least one of the signal identifier, the cell identifier, the frequency-domain resource location, the time-domain resource location, the period, and the power may also be pre-configured to the terminal, or agreed by a protocol.

In some implementations, the configuration information of the uplink energy-saving reference signal may be configuration information of an uplink energy-saving reference signal of one or more cells.

The sending, by the first network device, the configuration information of the uplink energy-saving reference signal to the network device associated with the second cell may be that the first network device allocates the configuration information of the uplink energy-saving reference signal, and sends the configuration information to the network device associated with the second cell. The configuration information of the uplink energy-saving reference signal is allocated by the energy-saving cell, and the configuration information is transmitted to the serving cell.

The reference information of the configuration information, sent by the first network device to the network device associated with the second cell, of the uplink energy-saving reference signal may be that the first network device sends the reference information to the network device associated with the second cell, so that the network device associated with the second cell determines the configuration information of the uplink energy-saving reference signal based on the reference information.

The first network device receives the configuration information of the uplink energy-saving reference signal sent by the network device associated with the second cell, the network device associated with the second cell allocates the configuration information of the uplink energy-saving reference signal and sends the configuration information to the network device of the first cell. The configuration information of the uplink energy-saving reference signal is allocated by the serving cell, and is notified to the energy-saving cell.

In an optional implementation, the uplink energy-saving reference signal includes: an uplink energy-saving reference signal sent by a terminal based on configuration information of an uplink energy-saving reference signal, where the configuration information is obtained by the terminal from a second cell, and the second cell is a serving cell of the terminal.

The configuration information and the second cell here may be obtained by referring to the configuration information described in the foregoing implementations, and details are not described herein again.

That the configuration information is obtained by the terminal from the second cell may be understood as that the cell of serving the terminal configures the uplink energy-saving reference signal for the terminal.

In this implementation, the terminal may obtain the configuration information from the serving cell, and send the uplink energy-saving reference signal in the first cell based on the configuration information, to reduce the overhead of the first cell. For example, the serving base station configures uplink energy-saving reference signals for one or more terminals, the first cell in the energy-saving state detects the uplink energy-saving reference signals, and when a pre-condition is met, the first cell turns on a corresponding communication service, for example, sends a conventional SSB and SIB information.

It should be noted that, in some implementations, the configuration information may also be obtained from the first cell in advance when the first cell is not in the energy-saving state.

Optionally, in a case that the first network device sends the configuration information or the reference information to a network device associated with the second cell, the method further includes:
receiving, by the first network device, a request message sent by a network device associated with the second cell, where the request message is used to obtain the configuration information, or the request message is used to obtain the reference information.

In this implementation, the foregoing configuration information may be sent to the network device associated with the second cell based on the request message. In some implementations, the first network device may actively send the configuration information to the network device associated with the second cell.

In an optional implementation, the method further includes: sending, by the first network device, state information of the first cell to a network device associated with a second cell; and the second cell is not in an energy-saving state.

The state information of the first cell may be change information of an energy-saving state of the first cell, for example, the state information may be state information indicating that the first cell is in an energy-saving state, or may be state information indicating that a communication service is started.

In this implementation, since the state information of the first cell is sent to the network device associated with the second cell, the network device associated with the second cell, after receiving the state information of the first cell, may perform operations such as load-balancing according to the state information of the first cell, to improve the overall performance of the communication system.

In this embodiment of the present disclosure, when the first cell of the first network device is in an energy-saving state, the first network device detects an uplink energy-saving reference signal; and the first network device starts the communication service of the first cell according to the detected uplink energy-saving reference signal. In this way, the communication service of the first cell can be started only when the uplink energy-saving reference signal is detected, so as to save energy consumption of the network device.

Referring to FIG. 3, FIG. 3 is a flowchart of a signal configuration method according to an embodiment of the present disclosure, as shown in FIG. 3, including the following steps.

Step 301: a second network device obtains configuration information of an uplink energy-saving reference signal of a first cell, where a state supported by the first cell includes an energy-saving state;

Step 302: the second network device sends, in a second cell of the second network device, the configuration information to a terminal; and the second cell is not in an energy-saving state.

The sending, in the second cell of the second network device, the configuration information to the terminal may send the configuration information by using at least one of the following messages: a dedicated Radio Resource Control (RRC) message, a broadcast message, or a multicast message.

For example, configuration information of an uplink energy-saving reference signal of one or more energy-saving cells is sent through a dedicated RRC message, a broadcast message, or a multicast message, and may specifically include a pilot signal identifier list, corresponding time-frequency resource positions, a period, and the like of the one or more energy-saving cells.

The second cell may be a cell of serving the terminal, so that the terminal receives the configuration information of the uplink energy-saving reference signal from the serving cell, and sends a corresponding uplink energy-saving reference signal according to the parameters of the configuration information.

Optionally, the sending, by the second network device in a second cell of the second network device, the configuration information to the terminal includes the following:
sending, by the second network device, the configuration message to the terminal through a dedicated message in the second cell of the second network device; or sending, by the second network device, the configuration message to the terminal through a broadcast message in the second cell of the second network device; or
sending, by the second network device, the configuration message to the terminal through a multicast message in the second cell of the second network device.

Optionally, that the second network device obtains the configuration information of the uplink energy-saving reference signal of the first cell includes: receiving, by the second network device, configuration information of the uplink energy-saving reference signal sent by a network device associated with the first cell; or
receiving, by the second network device, reference information of configuration information of the uplink energy-saving reference signal sent by a network device associated with the first cell, where the reference information is used by the second cell to determine configuration information of the uplink energy-saving reference signal; and determining, by the second network device, configuration information of the uplink energy-saving reference signal based on the reference information; or
allocating, by the second network device, the configuration information of the uplink energy-saving reference signal.

Optionally, in a case that the second network device determines the configuration information of the uplink energy-saving reference signal based on the reference information, or when the second network device allocates the configuration information of the uplink energy-saving reference signal, the method further includes: sending, by the second network device, the configuration information of the uplink energy-saving reference signal to a network device associated with the first cell.

Optionally, in a case that the second network device receives the configuration information of the uplink energy-saving reference signal sent by the network device associated with the first cell, or when the second network device receives the reference information of the configuration information of the uplink energy-saving reference signal sent by the network device associated with the first cell, the method further includes: sending, by the second network device, a request message to a network device associated with the first cell, where the request message is used to obtain the configuration information, or the request message is used to obtain the reference information.

Optionally, the uplink energy-saving reference signal includes one of the following:
a newly defined pilot signal in the protocol, a sounding reference signal SRS already defined in the protocol, and a positioning reference signal already defined in the protocol.

Optionally, the configuration information includes at least one of the following: a signal identifier, a cell identifier, a frequency-domain resource location, a time-domain resource location, a period, and a power.

Optionally, the method further includes: receiving, by the second network device, state information of the first cell sent by a network device associated with the first cell.

It should be noted that, as an implementation of the second network device corresponding to the embodiment shown in FIG. 2, a specific implementation manner of this embodiment is obtained by referring to related descriptions of the embodiment shown in FIG. 2, and in order to avoid repeated description, this embodiment is not described again, and the same beneficial effect may also be achieved.

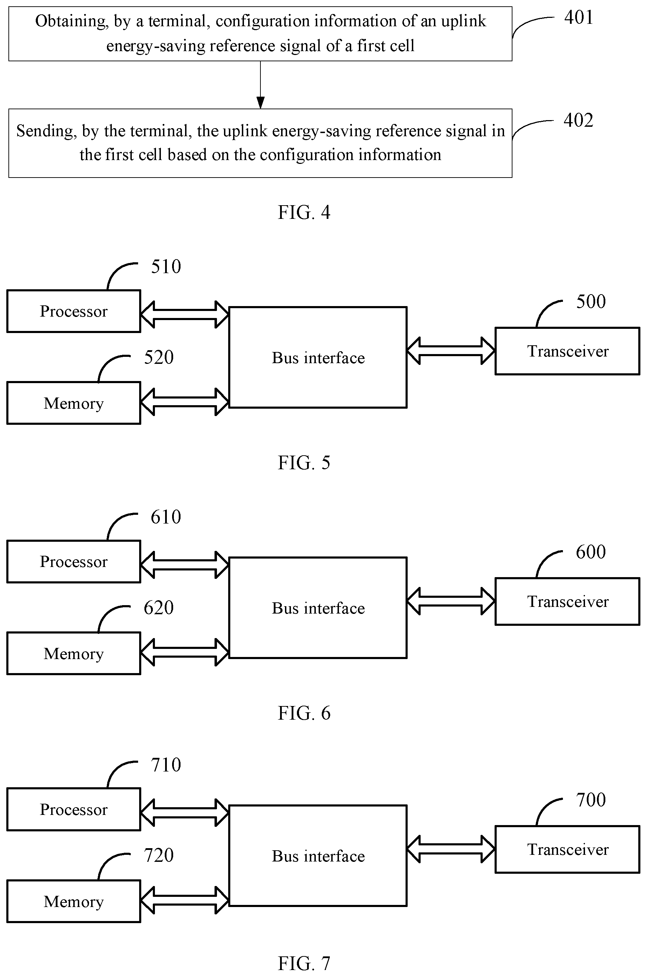

Referring to FIG. 4, FIG. 4 is a flowchart of a signal transmission method according to an embodiment of the present disclosure, as shown in FIG. 4, including the following steps 401-402.

Step 401: a terminal obtains configuration information of an uplink energy-saving reference signal of a first cell, where a state supported by the first cell includes an energy-saving state;
Step 402: the terminal sends the uplink energy-saving reference signal in the first cell based on the configuration information.

Optionally, the obtaining, by the terminal, the configuration information of the uplink energy-saving reference signal of the first cell includes one of the following:
receiving, by the terminal, configuration information of the uplink energy-saving reference signal sent through a dedicated message by a network device associated with a second cell; or
receiving, by the terminal, configuration information of the uplink energy-saving reference signal sent through a broadcast message by a network device associated with a second cell; or
receiving, by the terminal, configuration information of the uplink energy-saving reference signal sent through a multicast message by a network device associated with a second cell; wherein the second cell is not in an energy-saving state.

Optionally, the uplink energy-saving reference signal includes one of the following:
a newly defined pilot signal in the protocol, a sounding reference signal SRS having been defined in the protocol, and a positioning reference signal having been defined in the protocol.

Optionally, the configuration information includes at least one of the following: a signal identifier, a cell identifier, a frequency-domain resource location, a time-domain resource location, a period, and a power.

It should be noted that, as an implementation manner of the terminal corresponding to the embodiment shown in FIG. 2, a specific implementation manner of this embodiment may be obtained by referring to related descriptions of the embodiment shown in FIG. 2, and in order to avoid repeated description, the embodiment is not described herein again, and the same beneficial effects may also be achieved.

The following describes the methods provided in the embodiments of the present disclosure by using a plurality of embodiments in which a network device is a base station:

### Embodiment 1

This embodiment is described by using an example in which the base station configures the uplink energy-saving reference signal in a dedicated signaling manner, the following steps may be included:
Step 1: a base station sends, in dedicated RRC signaling for a terminal, configuration of uplink energy-saving reference signals of one or more energy-saving cells, specifically, sends a pilot signal identifier list, a corresponding time-frequency resource position, a period, a power, etc. for example, a pilot signal identifier # 1, a cell identifier X, a corresponding slot offset value 1, an NZP-CSI-RS-Resource 1, a period 1, a power control offset 1, and the like.
Step 2: after receiving the signaling, the terminal sends the uplink energy-saving reference signal according to the configuration, for example, the uplink energy-saving reference signal is sent according to the configuration of the pilot signal identifier # 1.
Step 3: the cell in the energy-saving state will detect these uplink energy-saving reference signals, and according to an implementation strategy, if the detected signal reaches a predefined requirement, for example, the threshold of the strength of the uplink energy-saving reference signal, the number of terminals sending the uplink energy-saving reference signals, etc. the cell decides to activate itself locally, specifically sends conventional downlink common information, such as SSB and SIB information, and turning on reception of a conventional uplink signal.
Step 4: (optionally) the cell notifies the source serving cell of information of its own energy-saving state change.

### Embodiment 2

This embodiment is described by using an example in which the base station configures the uplink energy-saving reference signal in a broadcast message manner, the following steps may be included:
Step 1: a base station sends configuration of one or more uplink energy-saving reference signals of one or more energy-saving cells in system information, specifically, the configuration is a pilot signal identifier list, a corresponding time-frequency resource position, a period, a power, etc. for example, a pilot signal identifier # 1, a cell identifier X, a corresponding slot offset value 1, an NZP-CSI-RS-Resource 1, a period 1, a power control offset 1, a pilot signal identifier # 2, a cell identifier Y where the pilot signal identifier # 2 is located, a corresponding slot offset value 2, an NZP-CSI-RS-Resource 2, a period 2, a power control offset 3, and the like.
Step 2: the terminal receives the system information, obtains the configuration, and then sends the uplink energy-saving reference signal on the specified time-frequency resource in combination with the pre-configured neighbor cell information, for example, the preconfigured neighbor cell is Y, and the sending operation is performed according to the configuration of the pilot signal identifier # 2;
Step 3: the cell in the energy-saving state will detect these uplink energy-saving reference signals, and according to the implementation strategy, if the detected signal reaches a predefined requirement, for example, the threshold of the strength of the uplink energy-saving reference signal, the number of terminals sending the uplink energy-saving reference signals, etc. the cell decides to activate itself locally, specifically including sending conventional downlink common information, such as SSB and SIB information, and turning on reception of a conventional uplink signal.
Step 4: (optionally) the cell notifies information of change of the source serving cell of its own energy-saving state.

### Embodiment 3

In this embodiment, by using an example in which the base station configures the uplink energy-saving reference signal in a multicast message manner, the following steps may be included:
Step 1: a base station configures, for a group of terminals, configuration, in a multicast message, of uplink energy-saving reference signals of one or more energy-saving cells, specifically, a pilot signal identifier list, a corresponding time-frequency resource position, a period, a power, and the like; for example, a pilot signal identifier # 1, a cell identifier X, a corresponding slot offset value 1, an NZP-CSI-RS-Resource 1, a period 1, a power control offset 1, and the like
Step 2: the terminals receive the multicast information, and after obtaining these configurations, the corresponding terminal sends the uplink energy-saving reference signal on a specified time-frequency resource according to a configuration, for example, a configuration of the pilot signal identifier # 1; and
Step 3: the cells in the energy-saving state will detect these uplink energy-saving reference signals, and according to the implementation strategy, if the detected signal reaches a predefined requirement, for example, the threshold of the strength of the uplink energy-saving reference signal, the number of terminals sending the uplink energy-saving reference signals, etc. the cell decides to activate itself locally, specifically sends conventional downlink common information, such as SSB and SIB information, and turns on reception of a conventional uplink signal.
Step 4: (optionally) the cells notify the source serving cell of its own energy-saving state change information.

### Embodiment 4

This embodiment is described by using an example in which the serving base station notifies the energy-saving base station of related energy-saving information, which may include the following steps:
Step 1: the base station where the serving cell is located notifies configuration of the uplink energy-saving reference signal allocated to the terminal (specifically, the pilot signal identifier lists, the corresponding time-frequency resource positions, periods, power, etc.) to the base station where the corresponding energy-saving cell is located through an Xn NG interface and the like.

Optionally, the configuration of the uplink energy-saving reference signals is allocated by using a process such as non-UE-related signaling or UE-related signaling.

Step 2: after receiving the information, the corresponding energy-saving cells perform uplink monitoring at configured uplink energy-saving reference signal time-frequency resources until a pre-configured condition requirement is met, and start an activation operation of the energy-saving cells.

### Embodiment 5

This embodiment is described by using an example in which the energy-saving base station notifies the serving base station of related energy-saving information. The following steps are included.

Step 1: a base station where a serving cell is located sends a request message to a base station where a corresponding energy-saving cell is located, and requests to configure an uplink energy-saving reference signal for a specific terminal.

Optionally, the uplink energy-saving reference signal is configured by using a process such as non-UE or UE-related signaling.

Step 2: after receiving the information, the corresponding energy-saving cell allocates configuration of a corresponding uplink energy-saving reference signal, which is specifically a pilot signal identifier list, a corresponding time-frequency resource position, period, power, etc. and returns a response message through an Xn NG interface.

Step 3: a corresponding energy-saving cell performs uplink monitoring at a configured time-frequency resource of the uplink energy-saving reference signal until a pre-configured condition requirement is met, and an activation operation of the energy-saving cell is started.

### Embodiment 6

This embodiment is described by using an example in which the energy-saving base station notifies the serving base station of related energy-saving information. This may include the following steps:
Step 1: a base station where an energy-saving cell is located sends a message related to energy-saving configuration to an adjacent base station, specifically, specifically, an uplink pilot signal identifier list, a corresponding time-frequency resource position, period, power, and the like.

Optionally, the message related to the energy-saving configuration is sent by using a process such as non-UE or UE-related signaling.

Step 2: after receiving the information, the corresponding neighboring base station returns a response message to acknowledge.

Step 3: the neighboring base station decides to configure the uplink energy-saving reference signal of the relevant UE according to the communication status of the UE, see Embodiments 1 to 3 for details.

Step 4: the energy-saving cell performs uplink monitoring at the configured time-frequency resource of uplink energy-saving reference signals until a pre-configured condition requirement is met, and an activation operation of the energy-saving cell is started.

In this embodiment of the present disclosure, the serving cell or the energy-saving cell may configure a corresponding uplink energy-saving signal according to needs, so that the required hotspot cell (that is, the energy-saving cell which starts the communication service) can be quickly and accurately started, so that the network energy-saving can be effectively realized while the service transmission of the terminal is guaranteed, and unnecessary activation of the energy-saving cell is avoided.

Referring to FIG. 5, FIG. 5 is a structural diagram of a network device according to an embodiment of the present disclosure, where the network device is a first network device, and as shown in FIG. 5, the network device includes a memory 520, a transceiver 500, and a processor 510.

The memory 520 is configured to store a computer program; the transceiver 500 is configured to send and receive data under the control of the processor 510; and the processor 510 is configured to read the computer program in the memory 520 and perform the following operations:
detecting an uplink energy-saving reference signal in a case that a first cell of the first network device is in an energy-saving state; and
starting the communication service of the first cell according to the detected uplink energy-saving reference signal.

In FIG. 5, the bus architecture may include any number of interconnected buses and bridges, and specifically, various circuits of one or more processors represented by the processor 510 and a memory represented by the memory 520 are linked together. The bus architecture may also link various other circuits, such as a peripheral device, a voltage regulator, and a power management circuit, which are well known in the art, and therefore are not further described herein. The bus interface provides an interface. The transceiver 500 may be a plurality of elements, that is, includes a transmitter and a receiver, and provides units for communicating with various other apparatuses on a transmission medium, where the transmission mediums include transmission media such as a wireless channel, a wired channel, and an optical cable.

The processor 510 is responsible for managing the bus architecture and general processing, and the memory 520 may store data used by the processor 510 when performing operations.

Optionally, the processor 510 may be a Central Processing Unit (CPU), an Application Specific Integrated Circuit (ASIC), a Field-Programmable Gate Array (FPGA), or a Complex Programmable Logic Device (CPLD), and the processor may also use a multi-core architecture.

The processor is configured to invoke the computer program stored in the memory, to perform any one of the methods provided in the embodiments of the present disclosure according to the obtained executable instruction. The processor and the memory may also be physically separated.

Optionally, the starting the communication service of the first cell according to the detected uplink energy-saving reference signal includes: starting the communication service of the first cell when it is detected that the uplink energy-saving reference signal meets a preset condition.

Optionally, the preset condition includes at least one of the following: a signal strength of the uplink energy-saving reference signal exceeds a first preset threshold; a quantity of terminals that send the uplink energy-saving reference signal exceeds a second preset threshold.

Optionally, the uplink energy-saving reference signal includes one of the following: a newly defined pilot signal in the protocol, an SRS already defined in the protocol, and a positioning reference signal already defined in the protocol.

Optionally, the uplink energy-saving reference signal includes: an uplink energy-saving reference signal sent by a terminal based on configuration information of an uplink energy-saving reference signal, where the configuration information is obtained by the terminal from a second cell, and the second cell is a serving cell of the terminal.

Optionally, the starting the communication service of the first cell includes: activating the first cell to start a communication service of the first cell.

Optionally, the communication service includes: sending a downlink common signal and/or receiving an uplink signal; wherein the uplink signal and the uplink energy-saving reference signal are different signals.

Optionally, the processor 510 is further configured to perform one of following:
sending configuration information of the uplink energy-saving reference signal to a network device associated with a second cell; or
sending reference information of configuration information of the uplink energy-saving reference signal to a network device associated with a second cell, wherein the reference information is used by the second cell to determine configuration information of the uplink energy-saving reference signal; or
receiving configuration information of the uplink energy-saving reference signal sent by a network device associated with the second cell; wherein the second cell is not in an energy-saving state.

Optionally, the configuration information includes at least one of the following: a signal identifier, a cell identifier, a frequency-domain resource location, a time-domain resource location, a period, and a power.

Optionally, in a case that the first network device sends the configuration information or the reference information to the network device associated with the second cell, the processor 510 is further configured to: receive a request message sent by a network device associated with the second cell, where the request message is used to obtain the configuration information, or the request message is used to obtain the reference information.

Optionally, the processor 510 is further configured to: send state information of the first cell to a network device associated with a second cell; and the second cell is not in an energy-saving state.

It should be noted that the above-mentioned network device provided in the embodiments of the present disclosure can implement all method steps implemented in the foregoing method embodiments, and can achieve the same technical effect, and details of the same parts and beneficial effects as those in the method embodiments in this embodiment are not described herein again.

Referring to FIG. 6, FIG. 6 is a structural diagram of a network device according to an embodiment of the present disclosure, wherein the network device is a second network device, and as shown in FIG. 6, the network device includes a memory 620, a transceiver 600, and a processor 610.

The memory 620 is configured to store a computer program; the transceiver 600 is configured to send and receive data under the control of the processor 610; and the processor 610 is configured to read the computer program in the memory 620 and perform the following operations: obtaining configuration information of an uplink energy-saving reference signal of a first cell, wherein a state supported by the first cell includes an energy-saving state; sending, in a second cell of the second network device, the configuration information to a terminal; wherein the second cell is not in an energy-saving stat.

In FIG. 6, the bus architecture may include any number of interconnected buses and bridges, and specifically, various circuits of one or more processors represented by the processor 610 and a memory represented by the memory 620 are linked together. The bus architecture may also link various other circuits, such as a peripheral device, a voltage regulator, and a power management circuit, which are well known in the art, and therefore are not further described herein. The bus interface provides an interface. The transceiver 600 may be a plurality of elements, that is, includes a transmitter and a receiver, and provides units for communicating with various other apparatuses on a transmission medium, where the transmission mediums include transmission media such as a wireless channel, a wired channel, and an optical cable.

The processor 610 is responsible for managing the bus architecture and general processing, and the memory 620 may store data used by the processor 610 when performing operations.

Optionally, the processor 610 may be a central processing unit (CPU), an application-specific integrated circuit (ASIC), a field-programmable gate array (FPGA), or a complex programmable logic device (CPLD), and the processor may also adopt a multi-core architecture.

The processor is configured to invoke the computer program stored in the memory, to perform any one of the methods provided in the embodiments of the present disclosure according to the obtained executable instructions. The processor and the memory may also be physically separated.

Optionally, the sending, by the second cell of the second network device, the configuration information to the terminal includes one of the following: sending, in the second cell of the second network device, the configuration message to the terminal through a dedicated message; or sending, in the second cell of the second network device, the configuration message to the terminal through a broadcast message; or sending, in the second cell of the second network device, the configuration message to the terminal through a multicast message.

Optionally, the obtaining the configuration information of the uplink energy-saving reference signal of the first cell includes: receiving configuration information of the uplink energy-saving reference signal sent by a network device associated with the first cell; or receiving reference information of configuration information of the uplink energy-saving reference signal sent by a network device associated with the first cell, wherein the reference information is used by the second cell to determine the configuration information of the uplink energy-saving reference signal; and determining, by the second network device, configuration information of the uplink energy-saving reference signal based on the reference information; or allocating, by the second network device, configuration information of the uplink energy-saving reference signal.

Optionally, in a case that the second network device determines the configuration information of the uplink energy-saving reference signal based on the reference information, or when the second network device allocates the configuration information of the uplink energy-saving reference signal, the processor 610 is further configured to: send the configuration information of the uplink energy-saving reference signal to a network device associated with the first cell.

Optionally, in a case that the second network device receives the configuration information of the uplink energy-saving reference signal sent by the network device associated with the first cell, or the second network device receives the reference information of the configuration information of the uplink energy-saving reference signal sent by the network device associated with the first cell, the processor 610 is further configured to: send a request message to a network device associated with the first cell, wherein the request message is used to obtain the configuration information, or the request message is used to obtain the reference information.

Optionally, the uplink energy-saving reference signal includes one of the following: a newly defined pilot signal in the protocol, a sounding reference signal SRS already defined in the protocol, and a positioning reference signal already defined in the protocol.

Optionally, the configuration information includes at least one of the following: a signal identifier, a cell identifier, a frequency-domain resource location, a time-domain resource location, a period, and a power.

Optionally, the processor 610 is further configured to: receive state information of the first cell sent by a network device associated with the first cell.

It should be noted that the above-mentioned network device provided in the embodiments of the present disclosure can implement all method steps implemented in the foregoing method embodiments, and can achieve the same technical effect, and details of the same parts and beneficial effects as those in the method embodiments in this embodiment are not described herein again.

Referring to FIG. 7, FIG. 7 is a structural diagram of a terminal according to an embodiment of the present disclosure, as shown in FIG. 7, the terminal includes a memory 720, a transceiver 700, and a processor 710.

The memory 720 is configured to store a computer program; the transceiver 700 is configured to send and receive data under the control of the processor 710; and the processor 710 is configured to read the computer program in the memory 720 and perform the following operations: obtaining configuration information of an uplink energy-saving reference signal of a first cell, wherein a state supported by the first cell includes an energy-saving state; sending the uplink energy-saving reference signal in the first cell based on the configuration information.

In FIG. 7, the bus architecture may include any number of interconnected buses and bridges, and specifically, various circuits of one or more processors represented by the processor 710 and a memory represented by the memory 720 are linked together. The bus architecture may also link various other circuits, such as a peripheral device, a voltage regulator, and a power management circuit, which are well known in the art, and therefore are not further described herein. The bus interface provides an interface. The transceiver 700 may be a plurality of elements, that is, includes a transmitter and a receiver, and provides units for communicating with various other apparatuses on a transmission medium, where the transmission mediums include transmission media such as a wireless channel, a wired channel, and an optical cable.

The processor 710 is responsible for managing the bus architecture and general processing, and the memory 720 may store data used by the processor 710 when performing operations.

Optionally, the processor 710 may be a central processing unit (CPU), an application-specific integrated circuit (ASIC), a field-programmable gate array (FPGA), or a complex programmable logic device (CPLD), and the processor may also use a multi-core architecture.

The processor is configured to invoke the computer program stored in the memory, to perform any one of the methods provided in the embodiments of the present disclosure according to the obtained executable instruction. The processor and the memory may also be physically separated.

Optionally, the obtaining, by the terminal, the configuration information of the uplink energy-saving reference signal of the first cell includes one of the following: receiving, by the terminal, the configuration information of the uplink energy-saving reference signal sent by a network device associated with a second cell through a dedicated message; or receiving, by the terminal, the configuration information of the uplink energy-saving reference signal sent by a network device associated with a second cell through a broadcast message; or receiving, by the terminal, the configuration information of the uplink energy-saving reference signal sent by a network device associated with a second cell through a multicast message; wherein the second cell is not in an energy-saving state.

Optionally, the uplink energy-saving reference signal includes one of the following: a newly defined pilot signal in the protocol, a sounding reference signal SRS already defined in the protocol, and a positioning reference signal already defined in the protocol.

Optionally, the configuration information includes at least one of the following: a signal identifier, a cell identifier, a frequency-domain resource location, a time-domain resource location, a period, and a power.

It should be noted that the above-mentioned terminal provided in the embodiments of the present disclosure can implement all method steps implemented in the foregoing method embodiments, and can achieve the same technical effect, and details of the same parts and beneficial effects as those in the method embodiments in this embodiment are not described herein again.

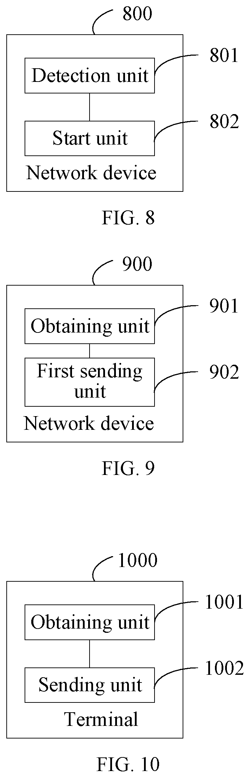

Referring to FIG. 8, FIG. 8 is a schematic structural diagram of another network device according to an embodiment of the present disclosure, where the network device is a first network device, as shown in FIG. 8, the network device 800 includes: a detection unit 801, configured to detect an uplink energy-saving reference signal when a first cell of the first network device is in an energy-saving state; and a start unit 802 is configured to start the communication service of the first cell according to the detected uplink energy-saving reference signal.

Optionally, the start unit 802 is configured to start the communication service of the first cell when it is detected that the uplink energy-saving reference signal meets a preset condition.

Optionally, the preset condition includes at least one of the following: that a signal strength of the uplink energy-saving reference signal exceeds a first preset threshold; and that the number of terminals that send the uplink energy-saving reference signals exceeds a second preset threshold.

Optionally, the uplink energy-saving reference signal includes one of the following: a newly defined pilot signal in the protocol, an SRS having been defined in the protocol, and a positioning reference signal having been defined in the protocol.

Optionally, the uplink energy-saving reference signal includes: an uplink energy-saving reference signal sent by a terminal based on configuration information of an uplink energy-saving reference signal, where the configuration information is obtained by the terminal from a second cell, and the second cell is a serving cell of the terminal.

Optionally, the starting the communication service of the first cell includes: activating the first cell to start a communication service of the first cell.

Optionally, the communication service includes: sending a downlink common signal and/or receiving an uplink signal; the uplink signal and the uplink energy-saving reference signal are different signals.

Optionally, the network device further includes one of the following: a first sending unit, configured to send configuration information of the uplink energy-saving reference signal to a network device associated with a second cell; or a second sending unit, configured to send reference information of configuration information of the uplink energy-saving reference signal to a network device associated with a second cell, where the reference information is used by the second cell to determine configuration information of the uplink energy-saving reference signal; or a first receiving unit, configured to receive configuration information of the uplink energy-saving reference signal sent by a network device associated with the second cell; wherein the second cell is not in an energy-saving state.

Optionally, the configuration information includes at least one of the following: a signal identifier, a cell identifier, a frequency-domain resource location, a time-domain resource location, a period, and a power.

Optionally, in a case that the first network device sends the configuration information or the reference information to the network device associated with the second cell, the network device further includes: a second receiving unit, configured to receive a request message sent by a network device associated with the second cell, where the request message is used to obtain the configuration information, or the request message is used to obtain the reference information.

Optionally, the network device further includes: a third sending unit, configured to send state information of the first cell to a network device associated with a second cell; wherein the second cell is not in an energy-saving state.

It should be noted that the above-mentioned network device provided in the embodiments of the present disclosure can implement all method steps implemented in the foregoing method embodiments, and can achieve the same technical effect, and details of the same parts and beneficial effects as those in the method embodiments in this embodiment are not described herein again.

Referring to FIG. 9, FIG. 9 is a schematic structural diagram of another network device according to an embodiment of the present disclosure, where the network device is a second network device, as shown in FIG. 9, the network device 900 includes: an obtaining unit 901, configured to obtain configuration information of an uplink energy-saving reference signal of a first cell, where a state supported by the first cell includes an energy-saving state; a first sending unit 902, configured to send, in a second cell of the second network device, the configuration information to a terminal; wherein the second cell is not in an energy-saving state.

Optionally, the obtaining unit 901 is configured to: send, in the second cell of the second network device, the configuration message to the terminal through a dedicated message; or send, in the second cell of the second network device, the configuration message to the terminal through a broadcast message; or send, in the second cell of the second network device, the configuration message to the terminal through a multicast message.

Optionally, the obtaining unit 901 is configured to: receive configuration information of the uplink energy-saving reference signal sent by a network device associated with the first cell; or receive reference information of configuration information of the uplink energy-saving reference signal sent by a network device associated with the first cell, where the reference information is used by the second cell to determine configuration information of the uplink energy-saving reference signal; and determine, by the second network device, configuration information of the uplink energy-saving reference signal based on the reference information; or allocate configuration information of the uplink energy-saving reference signal.

Optionally, in a case that the second network device determines the configuration information of the uplink energy-saving reference signal based on the reference information, or when the second network device allocates the configuration information of the uplink energy-saving reference signal, the network device further includes: a first sending unit, configured to send configuration information of the uplink energy-saving reference signal to a network device associated with the first cell.

Optionally, in a case that the second network device receives the configuration information of the uplink energy-saving reference signal sent by the network device associated with the first cell, or when the second network device receives the reference information of the configuration information of the uplink energy-saving reference signal sent by the network device associated with the first cell, the network device further includes: a second sending unit, configured to send a request message to a network device associated with the first cell, where the request message is used to obtain the configuration information, or the request message is used to obtain the reference information.

Optionally, the uplink energy-saving reference signal includes one of the following: a newly defined pilot signal in the protocol, a sounding reference signal SRS already defined in the protocol, and a positioning reference signal defined already in the protocol.

Optionally, the configuration information includes at least one of the following: a signal identifier, a cell identifier, a frequency-domain resource location, a time-domain resource location, a period, and a power.

Optionally, the network device further includes: a receiving unit, configured to receive state information of the first cell sent by a network device associated with the first cell.

It should be noted that the above-mentioned network device provided in the embodiments of the present disclosure can implement all method steps implemented in the foregoing method embodiments, and can achieve the same technical effect, and details of the same parts and beneficial effects as those in the method embodiments in this embodiment are not described herein again.

Referring to FIG. 10, FIG. 10 is a structural diagram of another terminal according to an embodiment of the present disclosure, as shown in FIG. 10, the terminal 1000 includes: an obtaining unit 1001, configured to obtain configuration information of an uplink energy-saving reference signal of a first cell, where a state supported by the first cell includes an energy-saving state; a sending unit 1002, configured to send the uplink energy-saving reference signal in the first cell based on the configuration information.

Optionally, the obtaining unit 1001 is configured to: receive configuration information of the uplink energy-saving reference signal sent by a network device associated with a second cell through a dedicated message; or receive configuration information of the uplink energy-saving reference signal sent by a network device associated with a second cell through a broadcast message; or receive configuration information of the uplink energy-saving reference signal sent by a network device associated with a second cell through a multicast message; wherein the second cell is not in an energy-saving state.

Optionally, the uplink energy-saving reference signal includes one of the following: a newly defined pilot signal in the protocol, a sounding reference signal SRS having been defined in the protocol, and a positioning reference signal having been defined in the protocol.

Optionally, the configuration information includes at least one of the following: a signal identifier, a cell identifier, a frequency-domain resource location, a time-domain resource location, a period, and a power.

It should be noted that the above-mentioned terminal provided in the embodiments of the present disclosure can implement all method steps implemented in the foregoing method embodiments, and can achieve the same technical effect, and details of the same parts and beneficial effects as those in the method embodiments in this embodiment are not described herein again.

It should be noted that the division of the units in the embodiments of the present disclosure is schematic, and is merely a logical function division, and there may be another division manner in actual implementation. In addition, functional units in the embodiments of the present disclosure may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on such understanding, the technical solutions of the present disclosure essentially or all or part of the technical solution may be embodied in the form of a software product, and the computer software product is stored in a storage medium, and includes several instructions for causing a computer device (which may be a personal computer, a server, or a network device) or a processor to perform all or part of the steps of the methods described in the embodiments of the present disclosure. The foregoing storage medium includes any medium that can store program code, such as a USB flash drive, a removable hard disk, a read-only memory (ROM), a random access memory (RAM), a magnetic disk, or an optical disk.

An embodiment of the present disclosure further provides a processor-readable storage medium, where the processor-readable storage medium stores a computer program, and the computer program is configured to cause the processor to perform the cell service control method provided in the embodiments of the present disclosure, or the computer program is configured to cause the processor to perform the signal configuration method provided in the embodiments of the present disclosure, or the computer program is configured to cause the processor to perform the signal transmission method provided in the embodiments of the present disclosure.

The processor-readable storage medium may be any usable medium or data storage device accessible by a processor, including but not limited to a magnetic memory (for example, a floppy disk, a hard disk, a magnetic tape, a magneto-optical disk (MO), etc.), an optical memory (for example, a compact disk (CD), a digital versatile disk (DVD), a Blu-ray disk (BD), a high-definition versatile disk (HVD), etc.), and a semiconductor memory (for example, a ROM, Erasable Programmable Read-Only Memory (EPROM), Electrically Erasable Programmable Read Only Memory (EEPROM), Non-Volatile Memory (NAND Flash), Solid State Disk (SSD)), etc.

It should be noted that it should be understood that the division of the foregoing modules is merely a division of logical functions, and may be completely or partially integrated into one physical entity during actual implementation, or may be physically separated. The modules may all be implemented in a form of software invoked by a processing element, or may all be implemented in a form of hardware; or some modules may be implemented in a form of invoking software by using a processing element, and some modules are implemented in a form of hardware. For example, the determining module may be a separately established processing element, or may be integrated in a chip of the foregoing apparatus, or may be stored in a memory of the apparatus in a form of program code, and a certain processing element of the apparatus invokes and executes the functions of the foregoing determining module. Implementation of other modules is similar. In addition, all or part of these modules may be integrated together, or may be implemented independently. The processing element described herein may be an integrated circuit having a signal processing capability. In an implementation process, steps of the foregoing method or the foregoing modules may be completed by using an integrated logic circuit of hardware in the processor element or an instruction in a form of software.

For example, each module, unit, subunit, or sub-module may be one or more integrated circuits configured to implement the above method, for example, one or more Application Specific Integrated Circuit (ASIC), or one or more microprocessors (DSP), or one or more field programmable gate arrays (FPGA). For another example, when the foregoing module is implemented in a form of scheduling program code by using a processing element, the processing element may be a general-purpose processor, for example, a central processing unit (Central Processing Unit, CPU), or another processor that can invoke the program code. For another example, these modules may be integrated together and implemented in a form of a system-on-a-chip (SOC).

In the specification and claims of the present disclosure, the terms "first", "second", and the like are intended to distinguish between similar objects, and are not necessarily used to describe a specific order or sequence. It should be understood that the data used in this way can be interchanged under appropriate circumstances, so that the embodiments of the present disclosure described herein, for example, are implemented in an order other than those illustrated or described herein. In addition, the terms "include" and "have" and any deformation thereof are intended to cover a non-exclusive inclusion, for example, a process, method, system, product, or device that includes a series of steps or units is not necessarily limited to those steps or units listed clearly, but may include other steps or units that are not clearly listed or inherent to these processes, methods, products, or devices. In addition, the specification and claims use "and/or" to refer to at least one of the connected objects, such as A and/or B and/or C represents the presence of A, B alone, C alone, and both A and B, both B and C, both A and C, and all of A, B and C. Similarly, use of "at least one of A and B" in this specification and claims should be understood as "A alone, B alone, or both A and B".

A person skilled in the art should understand that the embodiments of the present disclosure may be provided as a method, a system, or a computer program product. Therefore, the present disclosure may take the form of an entirely hardware embodiment, an entirely software embodiment, or an embodiment combining software and hardware aspects. Moreover, the present disclosure may use a form of a computer program product implemented on one or more computer-usable storage media (including but not limited to a disk memory, an optical memory, and the like) including computer-usable program codes.

The present disclosure is described with reference to the flowcharts and/or block diagrams of the method, the device (system), and the computer program product according to the embodiments of the present disclosure. It should be understood that each process and/or block in the flowcharts and/or block diagrams and a combination of processes and/or blocks in the flowcharts and/or block diagrams may be implemented by computer-executable instructions. These computer-executable instructions may be provided to a processor of a general-purpose computer, a special-purpose computer, an embedded processor, or other programmable data processing devices to generate a machine, so that the instructions executed by the processor of the computer or other programmable data processing devices generate means for implementing the functions specified in one or more flows of the flowcharts and/or one or more blocks in the block diagrams.

These processor-executable instructions may also be stored in a processor-readable memory that can direct a computer or other programmable data processing device to function in a particular manner, such that the instructions stored in the processor-readable memory produce an article of manufacture including an instruction device that implements the functions specified in one or more flows of the flowchart and/or one or more blocks of the block diagram.

These processor-executable instructions may also be loaded onto a computer or other programmable data processing device such that a series of operational steps are performed on the computer or other programmable device to produce a computer-implemented process, such that the instructions executed on the computer or other programmable device provide steps for implementing the functions specified in one or more flows of the flowchart and/or one or more blocks of the block diagram.

Evidently those skilled in the art can make various modifications and variations to the disclosure without departing from the spirit and scope of the disclosure. In this way, if these modifications and variations of the present disclosure fall within the scope of the claims of the present disclosure and their equivalent technologies, the present disclosure is also intended to include these modifications and variations.

## Claims

1. A cell service control method, comprising:
detecting, by a first network device, an uplink energy-saving reference signal in a case that a first cell of the first network device is in an energy-saving state;
starting, by the first network device, a communication service of the first cell according to the detected uplink energy-saving reference signal.

2. The method according to claim 1, wherein the starting, by the first network device, the communication service of the first cell according to the detected uplink energy-saving reference signal comprises:
starting, by the first network device, the communication service of the first cell when detecting that the uplink energy-saving reference signal meets a preset condition.

3. The method according to claim 2, wherein the preset condition comprises at least one of the following:
a signal strength of the uplink energy-saving reference signal exceeds a first preset threshold;
a quantity of terminals that send the uplink energy-saving reference signal exceeds a second preset threshold.

4. The method according to claim 1, wherein the uplink energy-saving reference signal comprises one of the following:
a newly defined pilot signal in a protocol, a sounding reference signal SRS defined in a protocol, and a positioning reference signal defined in a protocol.

5. The method according to any one of claims 1 to 4, wherein the uplink energy-saving reference signal comprises:
an uplink energy-saving reference signal sent by a terminal based on configuration information of an uplink energy-saving reference signal, wherein the configuration information is obtained by the terminal from a second cell, and the second cell is a serving cell of the terminal.

6. The method according to any one of claims 1 to 4, wherein the starting the communication service of the first cell comprises:
activating the first cell to start the communication service of the first cell.

7. The method according to any one of claims 1 to 4, wherein the communication service comprises:
sending a downlink common signal and/or receiving an uplink signal;
wherein the uplink signal and the uplink energy-saving reference signal are different signals.

8. The method according to any one of claims 1 to 4, wherein the method further comprises:
sending, by the first network device, configuration information of the uplink energy-saving reference signal to a network device associated with a second cell; or
sending, by the first network device, reference information of configuration information of the uplink energy-saving reference signal to a network device associated with a second cell, wherein the reference information is used by the second cell to determine configuration information of the uplink energy-saving reference signal; or
receiving, by the first network device, configuration information of the uplink energy-saving reference signal sent by a network device of the second cell;
wherein the second cell is not in an energy-saving state.

9. The method according to claim 8, wherein the configuration information comprises at least one of the following:
a signal identifier, a cell identifier, a frequency-domain resource location, a time-domain resource location, a period, and a power.

10. The method according to claim 8, wherein in a case that the first network device sends the configuration information or the reference information to a network device associated with the second cell, the method further comprises:
receiving, by the first network device, a request message sent by a network device associated with the second cell, wherein the request message is used to obtain the configuration information, or the request message is used to obtain the reference information.

11. The method according to any one of claims 1 to 4, wherein the method further comprises:
sending, by the first network device, state information of the first cell to a network device associated with a second cell;
wherein the second cell is not in an energy-saving state.

12. A signal configuration method, comprising:
obtaining, by a second network device, configuration information of an uplink energy-saving reference signal of a first cell, wherein a state supported by the first cell comprises an energy-saving state;
sending, by the second network device in a second cell of the second network device, the configuration information to a terminal;
wherein the second cell is not in an energy-saving state.

13. The method according to claim 12, wherein the sending, by the second network device in the second cell of the second network device, the configuration information to the terminal comprises one of the following:
sending, by the second network device, the configuration message to the terminal through a dedicated message in the second cell of the second network device; or
sending, by the second network device, the configuration message to the terminal through a broadcast message in the second cell of the second network device; or
sending, by the second network device, the configuration message to the terminal through a multicast message in the second cell of the second network device.

14. The method according to claim 12, wherein the obtaining, by the second network device, the configuration information of the uplink energy-saving reference signal of the first cell comprises:
receiving, by the second network device, configuration information of the uplink energy-saving reference signal sent by a network device associated with the first cell; or
receiving, by the second network device, reference information of configuration information of the uplink energy-saving reference signal sent by a network device associated with the first cell, wherein the reference information is used by the second cell to determine the configuration information of the uplink energy-saving reference signal; and determining, by the second network device, configuration information of the uplink energy-saving reference signal based on the reference information; or
allocating, by the second network device, configuration information of the uplink energy-saving reference signal.

15. The method according to claim 14, wherein in a case that the second network device determines the configuration information of the uplink energy-saving reference signal based on the reference information, or when the second network device allocates the configuration information of the uplink energy-saving reference signal, the method further comprises:
sending, by the second network device, the configuration information of the uplink energy-saving reference signal to a network device associated with the first cell.

16. The method according to claim 14, wherein in a case that the second network device receives the configuration information of the uplink energy-saving reference signal sent by the network device associated with the first cell, or when the second network device receives the reference information of the configuration information of the uplink energy-saving reference signal sent by the network device associated with the first cell, the method further comprises:
sending, by the second network device, a request message to the network device associated with the first cell, wherein the request message is used to obtain the configuration information, or the request message is used to obtain the reference information.

17. The method according to claim 12, wherein the uplink energy-saving reference signal comprises one of the following:
a newly defined pilot signal in a protocol, a sounding reference signal SRS defined in a protocol, and a positioning reference signal defined in a protocol.

18. The method according to any one of claims 12 to 17, wherein the configuration information comprises at least one of the following:
a signal identifier, a cell identifier, a frequency-domain resource location, a time-domain resource location, a period, and a power.

19. The method according to any of claims 12 to 17, wherein the method further comprises:
receiving, by the second network device, state information of the first cell sent by the network device associated with the first cell.

20. A signal transmission method, comprising:
obtaining, by a terminal, configuration information of an uplink energy-saving reference signal of a first cell, wherein a state supported by the first cell comprises an energy-saving state;
sending, by the terminal, the uplink energy-saving reference signal in the first cell based on the configuration information.

21. The method according to claim 20, wherein the obtaining, by the terminal, the configuration information of the uplink energy-saving reference signal of the first cell comprises one of the following:
receiving, by the terminal, the configuration information of the uplink energy-saving reference signal sent by a network device associated with a second cell through a dedicated message; or
receiving, by the terminal, the configuration information of the uplink energy-saving reference signal sent by a network device associated with a second cell through a broadcast message; or
receiving, by the terminal, the configuration information of the uplink energy-saving reference signal sent by a network device associated with a second cell through a multicast message;
wherein the second cell is not in an energy-saving state.

22. The method according to claim 20, wherein the uplink energy-saving reference signal comprises one of the following:
a newly defined pilot signal in a protocol, a sounding reference signal SRS defined in a protocol, and a positioning reference signal defined in a protocol.

23. The method according to any one of claims 20 to 22, wherein the configuration information comprises at least one of the following:
a signal identifier, a cell identifier, a frequency-domain resource location, a time-domain resource location, a period, and a power.

24. A network device, wherein the network device is a first network device, the network device comprises a memory, a transceiver, and a processor, wherein, the memory is configured to store a computer program; the transceiver is configured to send and receive data under the control of the processor; and the processor is configured to read the computer program in the memory and perform the following operations:
detecting an uplink energy-saving reference signal in a case that a first cell of the first network device is in an energy-saving state;
starting a communication service of the first cell according to the detected uplink energy-saving reference signal.

25. The network device according to claim 24, wherein the starting the communication service of the first cell according to the detected uplink energy-saving reference signal comprises:
starting the communication service of the first cell when detecting that the uplink energy-saving reference signal meets a preset condition.

26. The network device according to claim 25, wherein the preset condition comprises at least one of the following:
a signal strength of the uplink energy-saving reference signal exceeds a first preset threshold;
a quantity of terminals that send the uplink energy-saving reference signal exceeds a second preset threshold.

27. The network device according to any one of claims 24 to 26, wherein the uplink energy-saving reference signal comprises:
the uplink energy-saving reference signal sent by the terminal based on the configuration information of an uplink energy-saving reference signal, wherein the configuration information is obtained by the terminal from a second cell, and the second cell is a serving cell of the terminal.

28. The network device according to any one of claims 24 to 26, wherein the communication service comprises:
sending a downlink common signal and/or receiving an uplink signal;
wherein the uplink signal and the uplink energy-saving reference signal are different signals.

29. The network device according to any one of claims 24 to 26, wherein the processor is further configured to:
send the configuration information of the uplink energy-saving reference signal to a network device associated with a second cell; or
send reference information of the configuration information of the uplink energy-saving reference signal to a network device associated with a second cell, wherein the reference information is used by the second cell to determine the configuration information of the uplink energy-saving reference signal; or
receive the configuration information of the uplink energy-saving reference signal sent by a network device associated with a second cell;
wherein the second cell is not in an energy-saving state.

30. The network device according to claim 29, wherein when the first network device sends the configuration information or the reference information to the network device associated with the second cell, the processor is further configured to:
receive a request message sent by the network device associated with the second cell, wherein the request message is used to obtain the configuration information, or the request message is used to obtain the reference information.

31. The network device according to any one of claims 24 to 26, wherein the processor is further configured to:
send state information of the first cell to a network device associated with a second cell;
wherein the second cell is not in an energy-saving state.

32. A network device, wherein the network device is a second network device, the network device comprises a memory, a transceiver, and a processor, the memory is configured to store a computer program; the transceiver is configured to send and receive data under the control of the processor; the processor is configured to read the computer program in the memory and perform the following operations:
obtaining configuration information of an uplink energy-saving reference signal of a first cell, wherein a state supported by the first cell comprises an energy-saving state;
sending, in a second cell of the second network device, the configuration information to a terminal; wherein the second cell is not in an energy-saving state.

33. The network device according to claim 32, wherein sending, in the second cell of the second network device, the configuration information to the terminal comprises one of the following:
sending, in the second cell of the second network device, the configuration message to the terminal through a dedicated message; or
sending, in the second cell, the configuration message to the terminal through a broadcast message; or
sending, in the second cell of the second network device, the configuration message to the terminal through a multicast message.

34. The network device according to claim 32, wherein obtaining the configuration information of the uplink energy-saving reference signal of the first cell comprises:
receiving the configuration information of the uplink energy-saving reference signal sent by a network device associated with the first cell; or
receiving reference information of the configuration information of the uplink energy-saving reference signal sent by a network device associated with the first cell, wherein the reference information is used by the second cell to determine the configuration information of the uplink energy-saving reference signal; and determining, by the second network device, the configuration information of the uplink energy-saving reference signal based on the reference information; or
allocating the configuration information of the uplink energy-saving reference signal.

35. The network device according to claim 34, wherein in a case that the second network device determines the configuration information of the uplink energy-saving reference signal based on the reference information, or in a case that the second network device allocates the configuration information of the uplink energy-saving reference signal, the processor is further configured to:
send the configuration information of the uplink energy-saving reference signal to a network device associated with the first cell.

36. The network device according to claim 34, wherein the processor is further configured to: in a case that the second network device receives the configuration information of the uplink energy-saving reference signal sent by the network device associated with the first cell, or in a case that the second network device receives the reference information of the configuration information of the uplink energy-saving reference signal sent by the network device associated with the first cell, the processor is further configured to:
send a request message to the network device associated with the first cell, wherein the request message is used to obtain the configuration information, or the request message is used to obtain the reference information.

37. The network device according to any one of claims 32 to 36, wherein the processor is further configured to:
receive state information of the first cell sent by the network device associated with the first cell.

38. A terminal, comprising:
a memory, a transceiver, and a processor, wherein the memory is configured to store a computer program; the transceiver is configured to send and receive data under the control of the processor; and the processor is configured to read the computer program in the memory and perform the following operations:
obtaining configuration information of an uplink energy-saving reference signal of a first cell, wherein a state supported by the first cell comprises an energy-saving state; and
sending the uplink energy-saving reference signal in the first cell based on the configuration information.

39. The terminal according to claim 38, wherein obtaining the configuration information of the uplink energy-saving reference signal of the first cell comprises one of the following:
receiving the configuration information of the uplink energy-saving reference signal sent by a network device associated with a second cell through a dedicated message; or
receiving the configuration information of the uplink energy-saving reference signal sent by a network device associated with a second cell through a broadcast message; or
receiving the configuration information of the uplink energy-saving reference signal sent by a network device associated with a second cell through a multicast message; wherein the second cell is not in an energy-saving state.

40. A network device, wherein the network device is a first network device, the network device comprises:
a detection unit, configured to detect an uplink energy-saving reference signal when a first cell of the first network device is in an energy-saving state;
a start unit, configured to start a communication service of the first cell according to the detected uplink energy-saving reference signal.

41. The network device according to claim 40, wherein the start unit is configured to start the communication service of the first cell when detecting that the uplink energy-saving reference signal meets a preset condition.

42. The network device according to claim 41, wherein the preset condition comprises at least one of the following:
a signal strength of the uplink energy-saving reference signal exceeds a first preset threshold;
a quantity of terminals that send the uplink energy-saving reference signal exceeds a second preset threshold.

43. The network device according to any one of claims 40 to 42, wherein the uplink energy-saving reference signal comprises:
an uplink energy-saving reference signal sent by a terminal based on the configuration information of the uplink energy-saving reference signal, wherein the configuration information is obtained by the terminal from a second cell, and the second cell is a serving cell of the terminal.

44. The network device according to any one of claims 40 to 42, wherein the communication service comprises:
sending a downlink common signal and/or receiving an uplink signal;
the uplink signal and the uplink energy-saving reference signal are different signals.

45. The network device according to any one of claims 40 to 42, wherein the network device further comprises one of the following:
a first sending unit, configured to send the configuration information of the uplink energy-saving reference signal to a network device associated with a second cell; or
a second sending unit, configured to send reference information of configuration information of the uplink energy-saving reference signal to a network device associated with a second cell, wherein the reference information is used by the second cell to determine the configuration information of the uplink energy-saving reference signal; or
a first receiving unit, configured to receive the configuration information of the uplink energy-saving reference signal sent by a network device associated with a second cell; wherein the second cell is not in an energy-saving state.

46. The network device according to claim 45, wherein in a case that the first network device sends the configuration information or the reference information to the network device associated with the second cell, the network device further comprises:
a second receiving unit, configured to receive a request message sent by the network device associated with the second cell, wherein the request message is used to obtain the configuration information, or the request message is used to obtain the reference information.

47. The network device according to any one of claims 40 to 42, wherein the network device further comprises:
a third sending unit, configured to send state information of the first cell to a network device associated with a second cell; wherein the second cell is not in an energy-saving state.

48. A network device, wherein the network device is a second network device, the second network device comprises:
an obtaining unit, configured to obtain configuration information of an uplink energy-saving reference signal of a first cell, wherein a state supported by the first cell comprises an energy-saving state;
a first sending unit, configured to send the configuration information to a terminal in a second cell of the second network device; wherein the second cell is not in an energy-saving state.

49. The network device according to claim 48, wherein the first sending unit is configured to perform one of following:
sending, in the second cell of the second network device, the configuration message to the terminal through a dedicated message; or
sending, in the second cell of the second network device, the configuration message to the terminal through a broadcast message; or
sending, in the second cell of the second network device, the configuration message to the terminal through a multicast message.

50. The network device according to claim 48, wherein the obtaining unit is configured to receive the configuration information of the uplink energy-saving reference signal sent by a network device associated with the first cell; or
receiving the reference information of configuration information of the uplink energy-saving reference signal sent by a network device associated with the first cell, wherein the reference information is used by the second cell to determine the configuration information of the uplink energy-saving reference signal; and determining, by the second network device, the configuration information of the uplink energy-saving reference signal based on the reference information; or
allocating the configuration information of the uplink energy-saving reference signal.

51. The network device according to claim 50, wherein in a case that the second network device determines the configuration information of the uplink energy-saving reference signal based on the reference information, or in a case that the second network device allocates the configuration information of the uplink energy-saving reference signal, the network device further comprises:
a first sending unit, configured to send the configuration information of the uplink energy-saving reference signal to the network device associated with the first cell.

52. The network device according to claim 50, wherein in a case that the second network device receives the configuration information of the uplink energy-saving reference signal sent by the network device associated with the first cell, or, in a case that the second network device receives the reference information of the configuration information of the uplink energy-saving reference signal sent by the network device associated with the first cell, the network device further comprises:
a second sending unit, configured to send a request message to the network device associated with the first cell, wherein the request message is used to obtain the configuration information, or the request message is used to obtain the reference information.

53. The network device according to any one of claims 48 to 52, wherein the network device further comprises:
a receiving unit, configured to receive state information of the first cell sent by the network device associated with the first cell.

54. A terminal, comprising:
an obtaining unit, configured to obtain configuration information of an uplink energy-saving reference signal of a first cell, wherein a state supported by the first cell comprises an energy-saving state;
a sending unit, configured to send the uplink energy-saving reference signal in the first cell based on the configuration information.

55. The terminal according to claim 54, wherein the obtaining unit is configured to:
receive the configuration information of the uplink energy-saving reference signal sent by a network device associated with a second cell through a dedicated message; or
receive the configuration information of the uplink energy-saving reference signal sent by a network device associated with a second cell through a broadcast message; or
receive the configuration information of the uplink energy-saving reference signal sent by a network device associated with a second cell through a multicast message;
wherein the second cell is not in an energy-saving state.

56. A processor-readable storage medium, wherein the processor-readable storage medium stores a computer program, and the computer program is configured to cause the processor to perform a cell service control method according to any one of claims 1 to 11, or the computer program is configured to cause the processor to perform the signal configuration method according to any one of claims 12 to 19, or the computer program is configured to cause the processor to perform the signal transmission method according to any one of claims 20 to 23.
